# FASCICULE DE BREVET EUROPEEN

(11) **EP 1 441 890 B1**
(45) Date de publication et mention de la délivrance du brevet: **10.05.2006**
(21) Numéro de dépôt: 02785593.1
(22) Date de dépôt: 07.11.2002
(51) Int. Cl.: B29C 45/14

(54) **PROCEDE ET DISPOSITIF POUR REALISER UN CORDON PROFILE SUR UNE PIECE.**
VERFAHREN UND WERKZEUG ZUM UMSPRITZEN VON GLASSCHEIBEN MIT EINEM KUNSTSTOFFPROFIL.
METHOD AND DEVICE FOR PRODUCING A PROFILED RIM ON A COMPONENT.

(30) Priorité: 07.11.2001 DE 10154553
(43) Date de publication de la demande: 04.08.2004
(73) Titulaire: SAINT-GOBAIN GLASS FRANCE, 92400 Courbevoie (FR)
(72) Inventeur: ORTEN, Thomas, 52159 Roetgen (DE); BISCHOF, Thomas, 52074 Aachen (DE); CORNILS GERD, 52399 Merzenich (DE)
(74) Mandataire: Jamet, Vincent
(86) Numéro de dépôt international: PCT/FR2002/003814
(87) Numéro de publication internationale: WO 2003/039836

(56) Documents cités:
- DE-A- 10 021 808
- US-A- 4 732 553
- US-A- 4 854 599
- US-A- 5 421 940

## Description

L'invention se rapporte à un procédé pour réaliser un cordon profilé sur une pièce, avec les caractéristiques du préambule de la revendication 1. Elle se rapporte également à un dispositif convenant pour la mise en oeuvre du procédé.

On connaît différents procédés pour munir des pièces massives, aussi des vitres, par exemple des vitres de fenêtres en verre et/ou en plastique, d'un cordon profilé en plastique, par exemple en un élastomère thermoplastique, qui adhère sur une des faces (principales) de la pièce. Appliqué sur des vitres à proximité de leur bord, le cordon profilé recouvre parfois aussi la face latérale de celles-ci. En l'occurrence, les procédés avec lesquels on peut réaliser un raccord lisse en continuité de surface du cordon profilé à une face principale de la pièce non touchée par celui-ci, sont particulièrement intéressants.

On connaît par le document DE-Cl-42 32 554 un procédé de cette nature dans lequel une vitre de fenêtre est déposée sur un berceau de formage métallique chauffé et est ensuite pourvue, en une opération à l'aide d'une buse pilotée par un robot, d'un cordon profilé ayant la section transversale désirée recouvrant le bord de sa face principale supérieure et de sa face latérale. Le berceau de formage peut comporter un appui élastique, qui permet de compenser de petits écarts de dimensions entre la vitre de fenêtre et le berceau de formage.

Le document DE-A1-41 03 047 décrit un procédé analogue pour appliquer un profilé d'encadrement sur le bord d'une vitre, dans lequel un outil de formage en forme de goulotte est d'abord rempli avec une quantité partielle du plastique, à partir duquel le profilé d'encadrement est réalisé. Ensuite, la vitre est posée sur l'outil, et sa face principale est mise en contact avec le plastique. Ensuite, une matière plastique supplémentaire est ajoutée à l'aide d'une buse, jusqu'à ce que la forme de section transversale désirée du profilé d'encadrement soit atteinte. Le moule peut être flexible, afin qu'il puisse s'adapter au tracé du bord de la vitre. Il se compose cependant aussi dans chaque cas d'une partie de moule avec un contour fixe, qui peut rester, en cas de besoin, comme protection sur la vitre jusqu'au montage de celle-ci.

Le document DE-A1-93 26 650 A1 décrit un autre procédé pour réaliser un cordon profilé, qui est déposé le long du bord d'une vitre à l'aide d'une buse d'extrusion avec une ouverture en forme de bouche. Le cordon profilé peut avoir une section transversale en forme de U ou de L, qui recouvre au moins une face principale du côté du bord et la face latérale (le chant) de la vitre qui s'y raccorde et qui se raccorde le cas échéant à plat (en continuité de surface) à l'autre face principale de la vitre.

Dans les procédés connus, on ne peut pas éviter, en raison d'écarts de dimensions des vitres respectivement de leurs bords par rapport au contour théorique, qu'il se forme localement, entre le moule respectivement la bouche de la buse, et la face de la plaque, des interstices par lesquels la matière plastique à façonner - sous pression - s'échappe. Elle peut alors adhérer à des endroits indésirables sur la face de la plaque. De ce fait, il faut des opérations supplémentaires (enlever la matière, nettoyer les vitres), qui s'avèrent extrêmement gênantes et coûteuses, en particulier pour les processus de travail entièrement mécanisés.

Le document DE-A1-10021808 révèle un moule d'injection adapté pour réaliser un joint moulé affleurant sur une plaque de verre. Le moule comprend un système de compensation des tolérances disposé entre un élément de moule supérieur et un élément de moule inférieur, qui reçoit le bord de la plaque en formant un joint. Ce système comprend un patin épais monté sur un ressort ou présentant un espace creux conférant un peu de flexibilité. L'espace creux peut être mis sous pression réduite ou rempli de gaz ou de liquide. Suivant cette technique, il est nécessaire d'exercer une pression sur la plaque de verre, par l'intermédiaire du demi-moule supérieur, pression qui est transmise par le verre au patin, pour la formation d'un joint étanche.

Le document US 4 854 599 révèle un procédé pour réaliser un cordon profilé par encapeulation sur une pièce qui utilise un joint ayant une forme variable sous la prezaion d'un fluide qui est pressé contre la zone de bord de la pièce

L'invention a pour objet d'indiquer un procédé pour réaliser un cordon profilé sur une pièce à l'aide d'une surface de formage, dans lequel l'adaptation de la surface de formage sur la pièce est encore améliorée, ainsi que de proposer un dispositif qui convient particulièrement bien pour la mise en oeuvre du procédé.

Conformément à l'invention, cet objectif est atteint, en ce qui concerne le procédé, par les caractéristiques de la revendication 1. Les caractéristiques de la revendication 11 présentant un dispositif correspondant. L'invention a également pour objet un vitrage ayant les caractéristiques de la revendication 22. Les caractéristiques des sous-revendications rattachées à chacune des revendications indépendantes présentent des modes de réalisation avantageux de ces objets.

Une bonne adaptation de la surface de formage sur tout le contour ou seulement sur une partie du contour de la pièce à munir du cordon profilé peut à présent être obtenue par le fait que l'on combine une face de formage avec un support plat déformable par une pression de fluide (par fluide, on entend aussi bien des gaz que des liquides), la face de formage étant pressée contre la pièce, respectivement contre sa face latérale, par gonflage du support après mise en place et fixation de la pièce. La face de formage peut également, sous la pression uniforme du support, s'adapter à d'éventuelles irrégularités de la face ou de la face latérale de la pièce en regard. Naturellement, la pièce elle-même est en même temps fixée dans sa position de façon appropriée, par exemple à l'aide de supports opposés ou de contre appuis, afin qu'elle ne puisse pas échapper au pressage de la face de formage par la pression du fluide.

Ce procédé peut s'appliquer aussi bien à l'extrusion du cordon profilé in situ à partir d'une matière plastique par un mouvement relatif entre la buse d'extrusion et le bord de la pièce respectivement la face de formage appliquée sur celle-ci qu'à l'injection d'une matière plastique dans un moule fermé (de moulage par injection), qui définit le contour de profilé désiré. Ce dernier procédé suppose naturellement un accord précis des pressions du mécanisme d'injection et du support, afin que ce dernier ne s'affaisse pas sous la pression d'injection.

On désigne ici par matière plastique toute matière avec laquelle un cordon profilé, de section transversale définie et durable, peut être formé par extrusion ou injection. On emploie en règle générale des matières plastiques polymères, de préférence des polymères thermoplastiques, élastomères, polyuréthannes à 2 composants, etc. Celles-ci résistent également de manière satisfaisante aux hautes sollicitations dans les cas d'utilisation (changement de température, vibrations mécaniques, rayonnement solaire, etc.).

La face de formage peut être solidarisée en une unité de construction avec le support, elle peut même faire partie intégrante du support. Dans une forme de réalisation, une partie de moule comprenant la face de formage peut être sous la forme d'une bande relativement mince, flexible en direction longitudinale mais relativement rigide en direction transversale fixée, par exemple par collage ou vulcanisation, sur un support en forme de tube ou tuyau souple. Le support repose pour sa part sur un cadre porteur rigide ou analogue, dont le pourtour correspond sensiblement au tracé du contour de la pièce à munir du cordon profilé, par exemple d'une vitre. En cas de besoin, on peut aussi employer d'autres sections transversales, plus résistantes que des bandes.

Dans une autre forme de réalisation, la partie de moule comprenant la face de formage est intégrée directement dans le support. Il est par exemple possible d'extruder un profil en tube ou tuyau souple, qui intègre en une seule pièce aussi bien le support avec des parois relativement minces déformable sous une pression de fluide que la face de formage avec une section transversale épaissie, profilée extérieurement de la manière désirée.

Dans une troisième variante, la face de formage fait partie d'une partie de moule indépendante, séparée du support, qui est positionnée de manière adéquate à proximité de la pièce à munir du cordon profilé, d'une façon telle qu'elle puisse être pressée par le support contre une face ou une face latérale de la pièce immobilisée. En l'occurrence, la partie de moule en entier peut être fixe, par exemple lorsqu'elle est déjà en contact avec la pièce et assure l'adaptation nécessaire uniquement par sa déformation élastique, ou bien elle peut être entraînée par le support d'une position de repos abaissée vers une position soulevée.

Dans encore une autre variante, on peut fixer une partie de moule comprenant la face de formage avec la forme de section transversale requise, sur une membrane dont la surface est légèrement plus grande que la face de la pièce, respectivement de la vitre. Dans ce cas, seule ladite partie de moule doit être adaptée en une ou en plusieurs parties spécifiquement au contour de la pièce, respectivement de la vitre, tandis que la membrane serait universellement utilisable comme support pour plusieurs formes de pièces. La face de formage peut dans ce cas être fixée sur la membrane, par exemple par collage avec des colles détachables, par des bandes Velcro ou analogues dans la position désirée, soutenue par exemple par des gabarits. La membrane peut ainsi former la paroi d'un caisson porteur ou analogue, qui peut être alimenté en fluide sous pression. La vitre est positionnée sur la membrane respectivement sur la(les) partie(s) de moule, et immobilisée. En particulier, elle est empêchée de s'échapper par des contre appuis appropriées. Puis, la membrane est pressée contre la vitre par la pression de fluide, et ensuite la face de formage de la partie de moule s'applique de la manière adéquate contre la pièce appliquée sur la membrane, respectivement contre le bord de celle-ci.

La partie de moule elle-même, respectivement sa face de formage, peuvent se composer de toute matière appropriée. Il va de soi qu'il ne peut se produire, par le contact entre la face de formage et la pièce, aucune dégradation de la surface touchée de cette dernière. On peut utiliser comme partie de moule un appui souple, semi-dur, par exemple en PTFE ("Teflon"), en acier à ressorts. En particulier, des parties de moule composées de plastique peuvent être renforcées et raidies par des couches de tissus (par exemple en fibres de verre) ou de métaux (aluminium, acier).

En principe, il est vrai que la position dans laquelle la pièce est pourvue du cordon profilé importe peu. Toutefois, on la disposera avantageusement de telle manière que le cordon profilé soit orienté sensiblement à l'horizontale pendant sa réalisation, afin d'empêcher un écoulement de la matière plastique non encore solidifiée dans le sens longitudinal du cordon profilé. La face de formage peut alors être appliquée par le haut, par le bas et/ou latéralement sur le chant de la pièce, respectivement de la vitre.

Dans la plupart des cas, il convient de prévoir un contre-moule, qui représente l'autre paroi de la cavité de formage à réaliser, à l'opposé de la face de formage, qui définit la section transversale du cordon profilé.

Le fluide, qui peut être un gaz, par exemple de l'air dans le cas le plus simple, ou aussi un liquide hydraulique pratiquement incompressible, est envoyé dans l'espace creux du support de préférence à l'aide d'une pompe à double pression, qui peut de nouveau aspirer rapidement le fluide après le formage et la solidification du cordon profilé, afin de vider le support et de rompre le contact entre la face de formage et la vitre et le cordon profilé ("démouler" le cordon profilé).

Avec le procédé conforme à l'invention et avec des dispositifs adéquats, il est possible de munir d'un cordon profilé des pièces de toute nature en matières diverses (verre, céramique, plastiques, métaux), en outre pas seulement planes mais aussi des vitres avec des tolérances de cintrage plus grandes qu'actuellement (ondulation au bord en direction normale et parallèle à leur surface). Des écarts sur l'angle dit de "tangente d'extrémité" dans les vitres cintrées - c'est-à-dire l'angle que forme une tangente au bord de la vitre par rapport au plan supposé de la vitre - sont entièrement compensés, ce qui est possible de façon limitée avec des faces de formage rigides suivant l'état de la technique. De même, les vitres ne se trouvent plus en contact avec un moule inférieur dur, de telle manière que des dommages éventuels dans les surfaces lisses de la pièce sont évités.

Sur des vitres de fenêtres de véhicules, on peut extruder ou injecter des sections transversales profilées avec une partie d'écartement par rapport au côté de la carrosserie et une lèvre d'étanchéité s'étendant éventuellement par dessus le bord de la vitre, en affleurement avec la face latérale sans le léger retrait nécessaire jusqu'à présent par rapport à la face latérale, la face latérale du verre reste entièrement visible.

Egalement sur des vitres de véhicules, on peut réaliser des sections transversales profilées qui recouvrent un espace entre le chant (face latérale) de la vitre de fenêtre et la tôle de carrosserie, d'une manière telle qu'il se crée effectivement une transition lisse, sans cassure, de la face de la vitre au tronçon de profilé qui s'y raccorde.

De même, la face extérieure visible de la lèvre de recouvrement de la fente peut être incurvée de manière simple, prédéterminée par la face de formage.

Enfin, la face extérieure visible du cordon profilé ne comporte plus de bavures, qui sont causées dans les procédés connus par des rebords de la face de formage de l'outil.

La face extérieure visible du cordon profilé peut présenter des structures de surface quelconques, en conférant à la face de formage la structure négative correspondante.

L'outil flexible décrit convient pour façonner des cordons profilés aussi bien sur des vitres feuilletées (par exemple en verre de sécurité feuilleté) que sur des vitres monolithiques (verre de sécurité en particulier trempé). On peut aussi munir des pièces minces en plastiques durs d'un cordon profilé servant de lèvre d'étanchéité ou analogue, à l'aide du procédé et des outils décrits.

D'autres détails et avantages de l'objet de l'invention apparaîtront par les dessins d'un exemple de réalisation et de la description détaillée qui suit. Il va de soi que des cordons profilés peuvent également être façonnés avec le procédé de l'invention sur des pièces qui ne sont pas en forme de vitres. Il peut en l'occurrence aussi s'agir de pièces de forme, sur lesquelles il faut façonner une garniture d'étanchéité en matière plastique, de caissons, qui doivent être pourvus d'une moulure profilée, etc.

Les applications décrites ci-dessous se rapportent à l'équipement de vitres de véhicules avec un cordon profilé, sans aucune intention de limitation.

Dans les dessins, qui sont des représentations simplifiées, la
- Fig. 1: montre une coupe transversale d'une vue partielle d'une première forme de réalisation d'un dispositif avec une face de formage appliquée sur un support en tuyau souple, qui est retirée d'une vitre fixée dans le dispositif par détente de la pression intérieure du support; la
- Fig. 2: montre la même coupe transversale que dans la figure 1, mais dans laquelle la face de formage est à présent appliquée sur la vitre à l'aide du support, afin de façonner un cordon profilé recouvrant la face latérale de la vitre et se raccordant en affleurement à une des faces principales de celle-ci; et la
- Fig. 3: illustre une seconde forme de réalisation du dispositif, également en coupe transversale, avec laquelle un cordon profilé est façonné sur une vitre, avec une lèvre s'étendant librement sur la face latérale de la vitre, mais qui ne touche cependant pas la face latérale de la vitre.

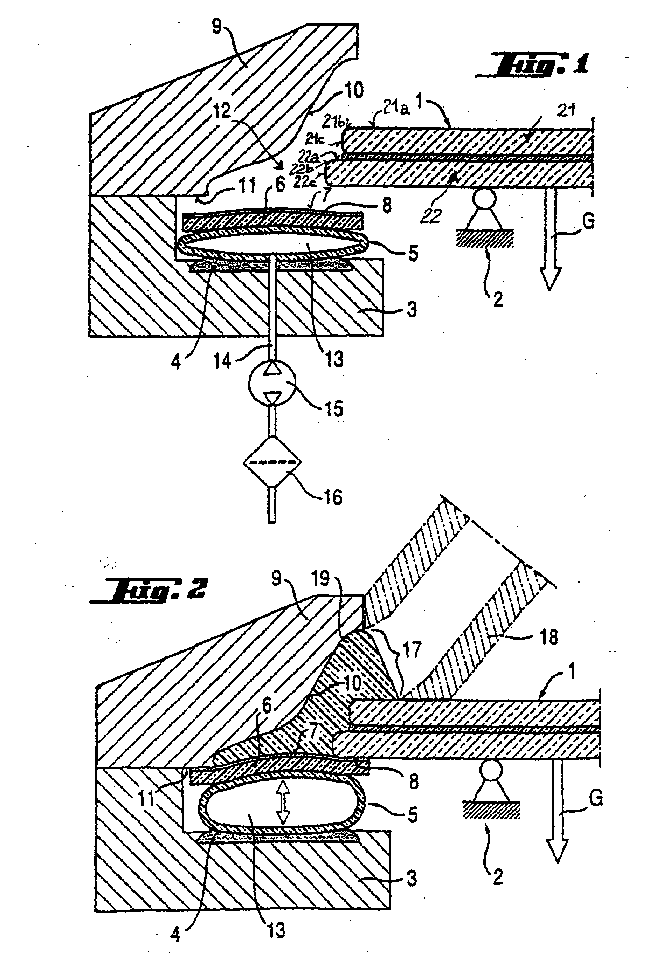

Suivant la **figure 1**, une vitre 1, qui est constituée ici par une vitre feuilletée avec deux feuilles individuelles rigides 21,22 en verre et/ou en plastique et une couche adhésive assemblant celles-ci, est posée en position globalement horizontale sur un appui immobile 2, uniquement schématisé, d'une station de traitement. Il s'agit par exemple d'un pare-brise pour une voiture. Une vitre monolithique en verre ou en plastique ou un autre objet en forme de plaque pourrait tout aussi bien être déposé dans le dispositif. La vitre 1 est, en plus de son poids propre, fixée sur les appuis par des moyens adéquats, par exemple des suceurs, dans la direction de la flèche G et est ainsi calée aussi latéralement. Lesdits moyens peuvent aussi presser par le haut sur la face de la vitre, si des collisions avec d'autres outils sont exclues.

On observe une coupe dans la zone de bord de la vitre 1, avec une direction de vision parallèle à l'une des arêtes latérales 21b,22b, respectivement des faces latérales 21c,22c de celle-ci. Sous le bord inférieur de la vitre 1 s'étend un cadre porteur rigide immobile 3. Un support en forme de tuyau souple 5 est fixé sur celui-ci via une couche intermédiaire 4. Sur la face supérieure de celui-ci est fixée une partie de moule 6, en forme de bande ou de ruban, dont la direction longitudinale est toujours parallèle à l'arête latérale de la vitre 1. Sur la face supérieure de la partie de moule 6 est formée une face de formage 7, qui est pourvue d'une couche anti-adhésive 8. La partie de moule 6 et sa face de formage 7 sont flexibles en direction longitudinale. La face de formage 7 s'étend également sous la face inférieure de la vitre sur une faible largeur. On montre ici une position de repos du dispositif (à considérer également comme position de chargement et de déchargement), dans laquelle le support en tuyau souple 5 est sans pression, ou dégonflé. En variante à la représentation, le support pourrait naturellement aussi être plus large que la partie de moule.

Un contre-moule 9 est en outre fixé de façon amovible (le cas échéant pivotant) sur le cadre porteur 3. Celui-ci présente un contour courbe de formage 10, dont le bord extérieur, éloigné de la vitre, porte un épaulement de soutien 11. Le bord intérieur du- contre-moule, respectivement l'extrémité de sortie du contour courbe 10, surplombe légèrement le bord de la vitre 1, au-dessus de sa face principale libre tournée vers le haut. Entre la face de formage 7 de la partie de moule 6, le contour courbe 10 du contre-moule 9 et la face latérale de la vitre 1, il se forme une cavité 12, qui sert de cavité de moulage pour la réalisation d'un cordon profilé ayant une forme de section transversale prédéterminée. La face de formage 7 constitue une paroi partielle de cette cavité.

En variante à la représentation, on peut réunir les appuis 2 et le cadre porteur 3. A cet effet, on pourrait former, sur le bord du cadre porteur 3 tourné vers la vitre 1, une nervure soit continue soit seulement sur des tronçons partiels du cadre porteur, le cas échéant ponctuelle, avec une hauteur définie, sur laquelle la vitre 1 peut être déposée. En même temps, une telle nervure peut aussi former un appui latéral contre un échappement du support en tuyau souple en direction de la vitre 1.

L'espace intérieur 13 du support en tuyau souple 5 est - à titre d'exemple schématique non limitatif - raccordé par une conduite 14 à une pompe 15 à pression double réversible, à commande par un moteur électrique, qui dans un sens de travail aspire de l'air dans l'atmosphère par un filtre 16 et l'envoie dans ledit espace intérieur 13. Dans l'autre sens de travail, la pompe à double pression 15 aspire à nouveau l'air de l'espace intérieur 13 et le rejette dans l'atmosphère.

Il va de soi que l'espace intérieur 13 peut aussi, en variante à ce mode de fonctionnement, être alimenté à partir d'un réservoir d'air comprimé, l'établissement de la pression, le niveau de pression et la détente étant commandés par des vannes.

On peut également imaginer une variation de pression hydraulique, dans laquelle on utilise comme fluide un liquide qui est transporté avec des dispositifs appropriés de pompes et de vannes.

Naturellement, on peut en cas de besoin prévoir plus d'un poste d'alimentation et d'échappement pour le fluide dans l'espace intérieur 13, lesquels sont éventuellement répartis sur la longueur de celui-ci.

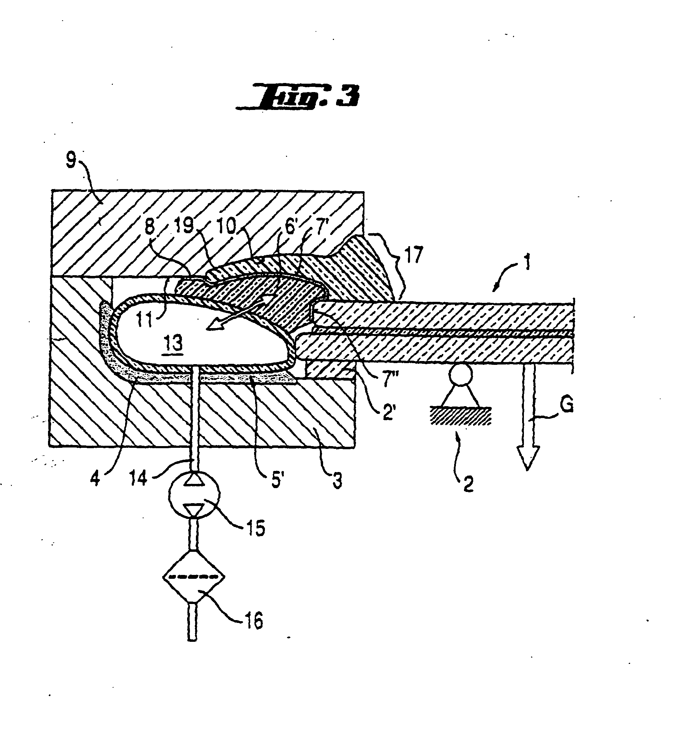

La **figure 2** montre la "position de travail" de ce même dispositif. L'espace intérieur 13 du support 5 se trouve à présent sous une pression de fluide. La pression peut être maintenue par exemple par la pompe à double pression en continu ou par la fermeture d'une vanne d'arrêt (cette dernière n'est pas représentée dans la figure 1). En cas d'utilisation d'un liquide hydraulique, le support 5 pourrait former, en bloquant le fluide, un appui pratiquement incompressible pour la partie de moule 6, qui maintient celle-ci immuablement sur la face de la vitre même contre la pression d'injection lors de l'injection du cordon profilé en une matière plastique. Sous l'influence de la hausse de la pression dans l'espace intérieur 13, la face de formage 7, respectivement des faces d'appui jointives à celle-ci des deux côtés, s'est appliquée d'une part sur la face inférieure de la vitre 1, d'autre part sur l'épaulement de soutien 11. Le mouvement de levée n'a besoin ici de se dérouler qu'en direction verticale (pour une position sensiblement horizontale de la vitre et du cadre porteur). La cavité 12 est à présent visible jusqu'à une fente 17 entre le contre-moule et la face principale 21a, respectivement la face supérieure de la vitre 1. La face de formage 7 s'applique pleinement, en raison de sa souplesse en direction longitudinale, d'une part sur la face de la vitre, d'autre part sur l'épaulement de soutien. Il ne reste pas de fente, respectivement pas de fuite ouverte. La partie de moule 6 est relativement rigide dans son sens transversal, de telle manière qu'elle ne puisse pas, ou seulement très peu, "fléchir" verticalement, lorsqu'une pression venant de la cavité 12 agit sur elle.

On voit en outre que la fin du contour courbe 10 est bien arrondie en direction de l'épaulement de soutien 11. Ainsi, on peut éviter l'apparition d'une bavure à la pointe de la lèvre d'étanchéité à produire sur le cordon profilé, dans la transition de la face de formage au contour courbe. Un agent anti-adhésif sera également déposé de façon connue en soi sur la surface du contour courbe, de telle manière que celle-ci puisse être séparée du cordon profilé après la réalisation de ce dernier.

Par la fente 17, on peut à présent introduire, de façon connue en soi, une masse de plastique 19 dans la cavité 12, à l'aide d'une buse d'extrusion 18 indiquée uniquement en traits interrompus. Elle y est formée en un cordon profilé avec la section transversale désirée. La buse est - comme cela est décrit dans le document précité DE-C1-42 32 554, et de préférence à l'aide d'un robot - pilotée le long de la fente aussi longuement que ce que doit être la longueur du cordon profilé terminé, c'est-à-dire au moins sur une partie du pourtour de la vitre ou sur tout le pourtour de la vitre. Elle peut , pour le guidage, s'appuyer des deux côtés de la fente 17 sur la face principale supérieure de la vitre et sur le contre-moule 9. Des transitions, respectivement le commencement et la fin du cordon profilé sont éventuellement parachevés de manière connue en soi.

En variante à la représentation, la buse d'extrusion 18 pourrait aussi prédéterminer le profil de la section transversale du cordon profilé, au moins en partie au lieu du contour courbe 9 ici fixe. On pourrait, en fonction de la configuration transversale désirée du cordon profilé, éventuellement même se passer entièrement d'un contre-moule ou moule supérieur, du fait que la buse d'extrusion elle-même, respectivement l'orifice de la buse, peut former le contour théorique pendant l'extrusion et qu'en même temps le soutien de la face de formage sur l'épaulement de soutien ou sur une pièce équivalente subsiste.

Le cordon profilé terminé, solidifié, adhère au moins sur le bord de la face principale supérieure de la vitre 1, que l'on a pourvue dans cette zone d'un agent adhésif, de façon connue en soi. Avec des vitres monolithiques, la masse de plastique de cette section transversale profilée peut aussi adhérer sur la face latérale de celle-ci. Avec des vitres feuilletées, on peut s'opposer à cette adhérence sur la face latérale par des moyens appropriés, afin que la couche adhésive puisse rester aérée. Ces moyens (par exemple revêtements anti-adhésifs, masques et analogues), peuvent sans difficultés être combinés avec les procédés décrits ici et avec le dispositif illustré, mais ne sont cependant pas représentés ici.

On voit que le cordon profilé formé se raccorde pratiquement continûment à la face principale inférieure de la vitre 1. La face de formage légèrement convexe lui donne un contour extérieur concave, qui convient bien pour, avec cette vitre 1 à l'état monté, recouvrir en affleurement une fente entre la face de la vitre et la tôle de carrosserie jointive à l'ouverture de la fenêtre ("profil de recouvrement de fente"). La lèvre très mince, s'étendant librement à la sortie, de cette section transversale profilée est soutenue en position stable par la face de formage 7 pendant le dépôt de la matière plastique et pendant sa solidification.

Au-dessus de la face principale supérieure 21a, le cordon profilé forme une boucle, respectivement - vue en direction longitudinale - une paroi, qui sert de pièce d'écartement (espaceur ou "spacer"), de façon connue en soi, pour respecter une distance prédéterminée entre la face intérieure de la vitre et la bride de montage de l'ouverture de fenêtre, à laquelle la vitre est collée de façon également connue en soi. Le cadre opaque usuel d'une façon générale dans les vitres de voitures, qui masque visuellement le cordon profilé et la ligne de colle de montage et qui les protège contre le rayonnement UV, n'est pas représenté ici.

Dans cette configuration du dispositif et du cordon profilé, la partie de moule 6 peut être réalisée en une seule pièce sous forme de cadre sans raccord - chaque fois pour un contour de vitre déterminé - et être combinée avec un support d'une pièce en forme de tuyau souple ou de membrane. Naturellement, une partie de moule en une seule pièce peut aussi être combinée avec plusieurs tronçons de support, qui peuvent de préférence être commandés de façon synchrone avec le fluide. Même lorsque la vitre ne doit être munie d'un cordon profilé que sur une partie de son pourtour, on peut néanmoins utiliser à cet effet une partie de moule complète, car la longueur du cordon profilé est déterminée par la commande de la course de la buse d'extrusion, pas par la partie de moule. Naturellement, la partie de moule peut aussi être fabriquée individuellement pour la longueur respective du cordon profilé.

Dans une autre variante du dispositif, qui est à présent illustrée dans sa position de travail dans la figure 3, le procédé conforme à l'invention est utilisé pour produire un "profilé à lèvre-écarteur" pur sans recouvrement de fente. Le cordon profilé ainsi désigné adhère uniquement sur la face principale 21a de la vitre 1 située à l'opposé d'un support 5'. Ici également, on façonne une lèvre s'étendant librement au-dessus du périmètre de la vitre. Celle-ci se trouve cependant, dans le cas de montage "carrosserie de véhicule", dans la profondeur de la fente entre la face latérale (alors libre) de la vitre et la face de la carrosserie.

A la différence de la configuration suivant les figures 1 et 2, la partie de moule 6' est ici appliquée sur l'arête latérale, respectivement la face latérale de la vitre 1. Cela exige certains changements par rapport à la disposition décrite précédemment. En particulier avec des vitres feuilletées, le côté, respectivement le pourtour extérieur de la vitre rigide 21 placée ultérieurement à l'intérieur est habituellement légèrement en retrait, comme cela est illustré ici, par rapport à la vitre 22 ultérieurement placée à l'extérieur. Etant donné que le cordon profilé doit adhérer sur la face principale 21a située à l'intérieur, on mène la partie de moule 6' en oblique à partir du bas sur la face latérale 21c de la vitre concernée (ici supérieure) (l'espace au-dessus de la vitre doit être dégagé pour d'autres outils, en particulier pour le bras de robot pilotant la buse d'extrusion). D'une part, ceci est pris en compte par une conception correspondante de la déformation du support en tuyau souple 5' lors de sa mise sous pression. Celle-ci est visualisée par une double flèche dessinée dans l'espace intérieur 13 du support 5'. L'avance de la partie de moule présente donc également, en plus d'une composante verticale - comme dans les figures 1 et 2 déjà - une composante horizontale radiale vers l'intérieur en direction de la face latérale de la vitre. La position oblique de la direction d'avance de la partie de moule 6' est ici représentée de manière exagérée pour des raisons de clarté.

D'autre part, la configuration de la partie de moule 6' elle-même est adaptée à ce cas d'application. A côté d'une face de formage 7' modifiée conformément à l'application, elle comprend également une face d'appui latérale 7", qui peut être appliquée d'une façon aussi lisse et étanche que possible sur la face latérale de la vitre 1. A la différence de la partie de moule 6 des figures 1 et 2, la partie de moule 6' devrait pouvoir épouser de façon élastique, même dans le sens transversal, d'éventuelles ondulations ou courbures dans la face latérale de la vitre 1. Des ondulations à cet endroit sont cependant extrêmement faibles en règle générale, parce que les arêtes de la vitre sont meulées avec un automate après le rompage. On peut avantageusement réaliser la partie de moule 6' elle-même de manière relativement rigide dans le sens transversal et ne la munir d'une mince couche élastique (non représentée) que sur la face d'appui 7", qui est déformable de manière suffisamment élastique contre la face latérale de la vitre sous la pression du support, afin de garantir l'adaptation souhaitée. Naturellement, cet appui élastique ne doit pas non plus adhérer à la matière plastique du cordon profilé.

Dans la position de travail, la partie de moule 6' s'appuie d'une part de nouveau sur l'épaulement de soutien 11 du contre-moule 9, d'autre part avec une force non négligeable contre la face latérale 21c de la vitre 1. En même temps, le support 5' lui-même peut aussi s'appliquer légèrement sur la face latérale 22c de la vitre rigide inférieure. La face d'appui latérale 7" de la partie de moule 6' est de préférence configurée de manière telle (concave) qu'en position de travail, elle se cale en forme avec la face latérale de la vitre 1 - meulée en arrondi (convexe) en section transversale -, respectivement avec sa vitre rigide supérieure. Ainsi, la force d'adhérence du support en direction verticale est renforcée pendant le remplissage de la masse plastique 19 dans la cavité 12. Enfin, il est encore prévu un appui 2' sous la forme d'un bloc de plastique ou d'une moulure de plastique, qui soutient la face inférieure de la vitre 1 en étant placée de la manière déjà mentionnée, sur le bord intérieur du cadre porteur 3.

Avec cette conception de la partie de moule 6', le cordon profilé peut, de façon particulièrement avantageuse, être placé pratiquement immédiatement sur l'arête de transition 21b entre la face principale supérieure 21a et la face latérale 21c de la vitre. Avec des procédés d'extrusion conventionnels, il faut respecter un léger retrait à cet endroit.

Naturellement, il est également possible, avec une autre configuration appropriée de la partie de moule, de déposer le cordon profilé plus ou moins largement en partie sur la face latérale 21c de la vitre rigide supérieure 21, voire également de la partie débordante de la surface interne (du côté de la matière adhésive) 22a de la vitre rigide inférieure 22. La matière du cordon profilé est alors limitée par l'arête de transition 22b entre la face principale interne 22a de la vitre inférieure 22 et la face latérale 22c de la vitre inférieure 22.

Toutes les étapes intermédiaires entre les "extrêmes" illustrés dans les figures 2 et 3 sont possibles, surtout avec des vitres monolithiques. On peut par exemple aussi presser la partie de moule sur le côté inférieur de la vitre rigide inférieure et en même temps recouvrir en partie la face latérale qui s'y applique à l'aide d'une face d'appui modifiée de la partie de moule.

Les autres conditions accessoires de cette configuration correspondent à celles de la réalisation suivant les figures 1 et 2, de sorte qu'il n'y a plus lieu d'y revenir en détail ici.

Si le cordon profilé doit être mené sans interruption autour d'un ou de plusieurs angles de la vitre 1 avec ce modèle du dispositif, les zones d'angle de la partie de moule 6' nécessitent alors certains frais supplémentaires. On pourrait diviser la partie de moule 6' en plusieurs portions individuelles, par exemple une pour chaque côté de la vitre, et ne placer ces portions l'une contre l'autre que dans la position de travail, alors qu'elles pourraient être écartées les unes des autres en position de repos en raison du mouvement diagonal de levée. Alors, il faut néanmoins prendre des mesures pour le dépôt aussi continu que possible de ces portions (par exemple des éléments d'emboîtement comme des dentures, des glissières, etc.). Chaque portion peut alors être actionnée par exemple par un support propre commandé par un fluide.

Considérant que le mouvement diagonal est cependant représenté ici de façon exagérée, la partie de moule peut aussi en pratique, dans cette réalisation, être constituée en une seule pièce. Dans les zones d'angle, on peut façonner en continu des portions élastiques dans le sens longitudinal, qui d'une part peuvent être appliquées sans discontinuité sur la vitre dans les angles de celle-ci, d'autre part peuvent être suffisamment déformées lors de la mise en position de repos écartée, afin de ne pas gêner la séparation complète de la partie de moule et de la vitre. On peut renforcer ce "démoulage" par exemple en associant ici aussi à chaque portion de la partie de moule en une seule pièce un support à commande par fluide, cette pluralité de supports étant à commande forcée, également dans le sens du retour (par exemple par mise sous dépression à l'aide de la pompe à double pression), et en produisant ainsi un renforcement du mouvement de séparation.

## Revendications

1. Procédé pour réaliser un cordon profilé en une matière plastique, en particulier en une matière polymère, sur une pièce (1), dans lequel au moins un tronçon partiel d'une zone de bord ou de face latérale d'une surface de la pièce (1) est mis en contact avec une face de formage (7, 7'), dans lequel la matière plastique (19) est déposée en adhérant sur au moins une partie du pourtour d'une surface de la pièce non recouverte par la face de formage et les dimensions extérieures du cordon profilé formé sont également définies par la face de formage, **caractérisé en ce que** la face de formage (7, 7') est pressée sur une zone de bord ou de face latérale de la pièce fixée (1) à l'aide d'un support plat (5, 5') ayant une forme variable sous la pression d'un fluide, la face de formage (7, 7') pouvant s'adapter à la pièce fixée (1) en partant d'une position de repos vers une position de travail appliquée sur la pièce (1) à l'aide du support plat (5, 5') à commande par pression variable de fluide.

2. Procédé suivant la revendication 1, **caractérisé en ce qu'**une partie de moule (6, 6') flexible dans le sens longitudinal est pressée, à l'aide du support (5, 5'), contre la pièce avec la face de formage adaptable sans joint à la surface de la pièce (1).

3. Procédé suivant la revendication 1 ou 2, **caractérisé en ce que** le support (5, 5') est commandé avec la pression de fluide aussi bien pour appliquer la face de formage sur la pièce que pour séparer la face de formage de la pièce.

4. Procédé suivant l'une quelconque des revendications précédentes, **caractérisé en ce que** la face de formage (7, 7') est utilisée pour former et soutenir une lèvre flexible du cordon profilé terminé, s'étendant librement à partir de la pièce.

5. Procédé suivant l'une quelconque des revendications 1 à 4, **caractérisé en ce que** la face de formage (7, 7') est pressée contre un côté de la pièce à l'aide du support (5, 5') et est utilisée pour le formage d'un cordon profilé sur une face se raccordant à ce côté.

6. Procédé suivant l'une quelconque des revendications 1 à 4, **caractérisé en ce que** la face de formage (7, 7') est pressée contre une face de la pièce à l'aide du support (5, 5'), afin de protéger au moins une partie de cette face contre la matière plastique du cordon profilé.

7. Procédé suivant l'une quelconque des revendications précédentes, **caractérisé en ce que** la face de formage (7, 7') est pressée par le support (5, 5') d'une part contre la pièce (1), d'autre part contre un épaulement de soutien (11) fixe par rapport au support.

8. Procédé suivant l'une quelconque des revendications précédentes, **caractérisé en ce que** le cordon profilé est réalisé par extrusion de la matière plastique (19) en contact avec la face de formage (7, 7'), dans lequel on empêche une adhérence de la matière à la face de formage.

9. Procédé suivant l'une quelconque des revendications précédentes 1 à 7, **caractérisé en ce que** le cordon profilé est réalisé par extrusion ou par injection de la matière plastique dans une cavité (12), dans laquelle la face de formage (7, 7') forme au moins une partie de paroi, dans lequel on empêche une adhérence de la matière à des parois de la cavité (12).

10. Procédé suivant l'une quelconque des revendications précédentes, **caractérisé en ce que**, lors du façonnage du cordon profilé sur une vitre, en particulier sur une vitre feuilletée, on utilise des moyens pour empêcher une adhérence de la matière polymère, respectivement du cordon profilé qui en résulte, sur une face latérale de la vitre recouverte par celle-ci (celui-ci).

11. Dispositif pour réaliser un cordon profilé en une matière plastique (19), en particulier en une matière polymère, sur une pièce (1), dispositif qui convient en particulier pour la mise en oeuvre d'un procédé suivant l'une quelconque des revendications précédentes, et qui présente les caractéristiques suivantes :
- des moyens (2, G) pour fixer la pièce (1),
- au moins une face de formage (7, 7'), qui peut être mise en contact avec une surface de la pièce (1) suivant la direction de l'extension du cordon profilé à façonner sur celle-ci,
- des moyens (18) pour déposer la matière plastique (19) sur au moins une partie du pourtour de la pièce, dans lequel les dimensions extérieures du cordon profilé formé, adhérant à une surface de la pièce, sont définies également par la face de formage (7, 7'),
**caractérisé en ce que** la face de formage (7, 7') peut s'adapter à la pièce fixée (1) en partant d'une position de repos vers une position de travail appliquée sur la pièce (1) à l'aide d'un support plat (5, 5') à commande par pression variable de fluide, qui s'étend au moins le long de la partie du pourtour de la pièce à munir du cordon profilé.

12. Dispositif suivant la revendication 11, **caractérisé en ce que** la face de formage (7, 7') est une surface d'une partie de moule flexible (6, 6') applicable sans joint sur la pièce (1) au moyen du support (5, 5') dans la position de travail.

13. Dispositif suivant la revendication 12, **caractérisé en ce que** la partie de moule flexible (6, 6') constitue une pièce séparée et est assemblée de façon fixe ou amovible au support (5, 5') ou peut être entraînée par celui-ci dans la position de travail.

14. Dispositif suivant la revendication 12, **caractérisé en ce que** la partie de moule est réalisée en une seule pièce avec le support.

15. Dispositif suivant l'une quelconque des revendications de dispositif qui précèdent, **caractérisé en ce que** le support (5, 5') présente une section transversale en forme de tuyau souple avec un espace intérieur qui peut être mis sous pression de fluide.

16. Dispositif suivant l'une quelconque des revendications de dispositif qui précèdent, **caractérisé en ce que** le support est réalisé sous forme de membrane, qui est une paroi mobile d'une chambre pouvant être mise sous pression de fluide.

17. Dispositif suivant l'une quelconque des revendications de dispositif qui précèdent, **caractérisé en ce que** le support (5, 5') est soutenu par un cadre porteur (3), qui s'étend au moins le long de la partie du pourtour de la vitre (1) , qui doit être munie du cordon profilé.

18. Dispositif suivant la revendication 17, **caractérisé en ce que** le cadre porteur (3) comprend des appuis pour soutenir la pièce (1) à munir du cordon profilé.

19. Dispositif suivant l'une quelconque des revendications de dispositif qui précèdent, **caractérisé en ce qu'**il est prévu un contre-moule (9) pour former une cavité (12) s'étendant le long de la partie du pourtour de la pièce à munir du cordon profilé, et dont le contour intérieur (10) définit, en se raccordant à la face de formage, le profil de section transversale du cordon profilé.

20. Dispositif suivant l'une quelconque des revendications de dispositif qui précèdent, **caractérisé en ce que** la face de formage (7) est applicable sur un côté de la pièce (1) à l'aide du support, d'une manière telle qu'elle forme un prolongement de la surface de la pièce jointive à ce côté, au-delà du pourtour de celle-ci.

21. Dispositif suivant l'une quelconque des revendications de dispositif qui précédent, **caractérisé en ce qu'**une partie de moule (6') portant la face de formage (7') est applicable sur une face latérale d'une vitre (1) à l'aide du support, la partie de moule (6') étant pourvue d'une face d'appui (7") adaptée au contour de cette face latérale.

## Patentansprüche

1. Verfahren zum Herstellen eines Profilstrangs aus einem plastischen Material, insbesondere aus einem Polymermaterial, an einem Bauteil (1), bei dem wenigstens ein Teilabschnitt eines Rand- oder Kantenbereichs einer Oberfläche des Bauteils (1) mit einer Formfläche (7, 7') in Berührung gebracht wird, wobei das plastische Material (19) auf zumindest einen Teil des Umfangs einer von der Formfläche nicht abgedeckten Oberfläche des Bauteils haftend aufgebracht wird und die Außenabmessungen des gebildeten Profilstrangs von der Formfläche definiert werden, **dadurch gekennzeichnet, dass** die Formfläche (7; 7') an einen Rand- oder Kantenbereich des befestigten Bauteils (1) mithilfe eines flächigen Supports (5; 5') mit durch Fluiddruck veränderlicher Form angedrückt wird, die Formfläche (7, 7') kann sich durch Wechsel einer Ruheposition zu einer auf das Bauteil (1) einwirkenden Arbeitsposition an das befestigte Bauteil (1) mithilfe des flächigen Supports (5; 5') durch variablen Fluiddruck anpassen.

2. Verfahren nach Anspruch 1, **dadurch gekennzeichnet, dass** mithilfe des Supports (5, 5') ein in seiner Längsrichtung flexibles Formteil (6, 6') mit der fugenlos an die Oberfläche des Bauteils anschmiegbaren Formfläche (7; 7') gegen das Bauteil (1) gedrückt wird.

3. Verfahren nach Anspruch 1 oder 2, **dadurch gekennzeichnet, dass** der Support (5, 5') mittels Fluiddruck sowohl zum Aufbringen der Formfläche auf das Bauteil, als auch zum Ablösen der Formfläche vom Bauteil gesteuert ist.

4. Verfahren nach einem der vorstehenden Ansprüche, **dadurch gekennzeichnet, dass** die Formfläche (7, 7') zum Ausformen und Stützen einer frei vom Bauteil abkragenden flexiblen Lippe des fertigen Profilstrangs verwendet wird.

5. Verfahren nach einem der Ansprüche 1 bis 4, **dadurch gekennzeichnet, dass** die Formfläche (7, 7') mithilfe des Supports (5, 5') gegen eine Kante des Bauteils (1) angedrückt und zum Ausformen eines Profilstrangs auf einer sich an diese Kante anschließenden Fläche verwendet wird.

6. Verfahren nach einem der Ansprüche 1 bis 4, **dadurch gekennzeichnet, dass** die Formfläche (7, 7') mithilfe des Supports (5, 5') gegen eine Fläche des Bauteils angedrückt wird, um wenigstens einen Teil dieser Fläche gegen das plastische Material des Profilstrangs abzuschirmen.

7. Verfahren nach einem der vorstehenden Ansprüche, **dadurch gekennzeichnet, dass** die Formfläche (7; 7') vom Support (5; 5') einerseits gegen das Bauteil (1), andererseits gegen eine im Verhältnis zum Support ortsfeste Stützschulter (11) angedrückt wird.

8. Verfahren nach einem der vorstehenden Ansprüche, **dadurch gekennzeichnet, dass** der Profilstrang durch Extrusion des plastischen Materials (19) in Verbindung mit der Formfläche (7, 7') realisiert wird, womit man eine Haftung des Materials an der Formfläche verhindert.

9. Verfahren nach einem der vorstehenden Ansprüche 1 bis 7, **dadurch gekennzeichnet, dass** der Profilstrang durch extrudieren oder einspritzten des plastischen Materials in eine Kavität (12) hergestellt wird, in der die Formfläche (7; 7') mindestens eine Teilwand bildet, wobei ein Anhaften des Materials an Wänden der Kavität (12) verhindert wird.

10. Verfahren nach einem der vorstehenden Ansprüche, **dadurch gekennzeichnet, dass** beim Anformen des Profilstrangs an eine Scheibe, insbesondere an eine Verbundscheibe, Mittel zum Verhindern eines Anhaftens des Polymermaterials bzw. des daraus hergestellten Profilstrangs an einer von ihm überdeckten Stirnfläche der Scheibe eingesetzt werden.

11. Vorrichtung zum Herstellen eines Profilstrangs aus einem plastischen Material (19), insbesondere aus einem Polymermaterial, Vorrichtung, die sich insbesondere zum Durchführen eines Verfahrens nach einem der vorstehenden Ansprüche eignet und folgende Merkmale hat:
- Mittel (2, G) zum ortsfesten Fixieren des Bauteils (1),
- mindestens eine Formfläche (7, 7'), welche mit einer Oberfläche des Bauteils (1) in der Erstreckungsrichtung des an diese anzuformenden Profilstrangs in Berührung bringbar ist,
- Mittel (18) zum Extrudieren des plastischen Materials (19) auf zumindest einen Teil des Umfangs des Bauteils, wobei die Außenabmessungen des gebildeten, an einer Oberfläche des Bauteils haftenden Profilstrangs von der Formfläche (7; 7') definiert werden,
**dadurch gekennzeichnet, dass** die Formfläche (7, 7') mithilfe eines durch Fluiddruck steuerbaren flächigen Supports (5; 5') an das fixierte Bauteil (1) aus einer Ruhestellung in eine an das Bauteil (1) angelegte Arbeitsstellung anschmiegbar ist, welcher sich mindestens entlang dem mit dem Profilstrang zu versehenden Teil des Umfangs des Bauteils erstreckt.

12. Vorrichtung nach Anspruch 11, **dadurch gekennzeichnet, dass** die Formfläche (7; 7') eine Oberfläche eines mittels des Supports (5; 5') in der Arbeitsstellung fugenlos an das Bauteil (1) anlegbaren flexiblen Formteils (6; 6') ist.

13. Vorrichtung nach Anspruch 12, **dadurch gekennzeichnet, dass** das flexible Formteil (6; 6') als separates Bauteil ausgeführt und mit dem Support (5; 5') fest oder lösbar verbunden oder von diesem in die Arbeitsstellung mitnehmbar ist.

14. Vorrichtung nach Anspruch 12, **dadurch gekennzeichnet, dass** das Formteil einstückig mit dem Support ausgebildet ist.

15. Vorrichtung nach einem der vorstehenden Vorrichtungsansprüche, **dadurch gekennzeichnet, dass** der Support (5, 5') einen schlauchförmigen Querschnitt mit einem mit Fluiddruck beaufschlagbaren Innenraum hat.

16. Vorrichtung nach einem der vorstehenden Vorrichtungsansprüche, **dadurch gekennzeichnet, dass** der Support als Membran ausgeführt ist, die eine bewegliche Wand einer mit dem Fluiddruck beaufschlagbaren Kammer ist.

17. Vorrichtung nach einem der vorstehenden Vorrichtungsansprüche, **dadurch gekennzeichnet, dass** der Support (5; 5') von einem Tragrahmen (3) gestützt ist, der sich zumindest entlang dem Teil des Umfangs des Bauteils (1) erstreckt, der mit dem Profilstrang zu versehen ist.

18. Vorrichtung nach Anspruch 17, **dadurch gekennzeichnet, dass** der Tragrahmen (3) Stützen zum Auflagern des mit dem Profilstrang zu versehenden Bauteils (1) umfasst.

19. Vorrichtung nach einem der vorstehenden Vorrichtungsansprüche, **dadurch gekennzeichnet, dass** eine Gegenform (9) zum Ausbilden einer sich entlang dem mit dem Profilstrang zu versehenden Teil des Umfangs des Bauteils erstreckenden Kavität (12) vorgesehen ist, deren Innenkontur (10) im Anschluss an die Formfläche das Querschnittsprofil des Profilstrangs definiert.

20. Vorrichtung nach einem der vorstehenden Vorrichtungsansprüche, **dadurch gekennzeichnet, dass** die an das Bauteil angedrückte Formfläche (7) eine Fortsetzung der an diese Kante anstoßenden Oberfläche des Bauteils über dessen Umfang hinaus bildet, so dass der geformte Profilstrang sich stufenlos an diese Oberfläche des Bauteils (1) anschließt.

21. Vorrichtung nach einem der vorstehenden Vorrichtungsansprüche, **dadurch gekennzeichnet, dass** ein die Formtläche (7') tragendes Formteil (6') mithilfe des Supports an eine Stirnfläche eines Bauteils (1) in Scheibenform anlegbar ist, wobei das Formteil (6') mit einer an die Kontur dieser Stirnfläche angepassten Anlagefläche (7") versehen ist.

## Claims

1. A method for producing a profiled bead made of a plastic, particularly of a polymer, on a piece (1), in which method at least a partial portion of an edge region or lateral face region of a surface of the piece (1) is brought into contact with a forming face (7, 7'), in which method the plastic (19) is deposited stuck to at least part of the periphery of a surface of the piece not covered by the forming face and the external dimensions of the profiled bead formed are also defined by the forming face, **characterized in that** the forming face (7; 7') is pressed against an edge region or lateral face region of the fixed piece (1) using a flat support (5; 5') having a shape that can vary under the pressure of a fluid and the forming face (7; 7') can fit to the fixed piece (1) starting from a rest position and moving towards a work position in which it is applied to the piece (1) by means of a flat support (5; 5') controlled by variable fluid pressure.

2. The method as claimed in claim 1, **characterized in that** part (6; 6') of a mold that is flexible in the longitudinal direction is pressed, using the support (5; 5'), against the piece with the forming face able to mate, without a seal, with the surface of the piece (1).

3. The method as claimed in claim 1 or 2, **characterized in that** the support (5; 5') is controlled with the fluid pressure both to apply the forming face against the piece and to separate the forming face from the piece.

4. The method as claimed in any one of the preceding claims, **characterized in that** the forming face (7; 7') is used to form and to support a flexible lip of the finished profiled bead, extending freely from the piece.

5. The method as claimed in any one of claims 1 to 4, **characterized in that** the forming face (7; 7') is pressed against one side of the piece using the support (5; 5') and is used to form a profiled bead on a face attached to this side.

6. The method as claimed in any one of claims 1 to 4, **characterized in that** the forming face (7; 7') is pressed against a face of the piece using the support (5; 5'), so as to protect at least part of this face from the plastic of the profiled bead.

7. The method as claimed in any one of the preceding claims, **characterized in that** the forming face (7; 7') is pressed by the support (5; 5') on the one hand against the piece (1) and on the other hand against a support shoulder (11) thus fixed with respect to the support.

8. The method as claimed in any one of the preceding claims, **characterized in that** the profiled bead is produced by extruding plastic (19) in contact with the forming face (7; 7'), in which method the material is prevented from sticking to the forming face.

9. The method as claimed in any one of the preceding claims 1 to 7, **characterized in that** the profiled bead is produced by extruding or injecting plastic into a cavity (12), in which the forming face (7; 7') forms at least a wall part, in which the material is prevented from sticking to walls of the cavity (12).

10. The method as claimed in any one of the preceding claims, **characterized in that**, when the profiled bead is being fashioned on a window pane, particularly on a laminated window pane, use is made of means to prevent the polymer, or the resulting profiled bead, from sticking to a lateral face of the window pane which is covered by this polymer (or resulting bead).

11. A device for producing a profiled bead in a plastic (19), particularly in a polymer, on a piece (1), which device is particularly suited for the implementation of a method as claimed in any one of the preceding claims, and which exhibits the following features:
- means (2, G) for fixing the piece (1),
- at least a forming face (7, 7') which can be brought into contact with a surface of the piece (1) in the direction of extension of the profiled bead that is to be fashioned thereon,
- means (18) for depositing the plastic (19) on at least part of the periphery of the piece, in which the external dimensions of the formed profiled bead, sticking to a surface of the piece, are defined also by the forming face (7; 7'),
**characterized in that** the forming face (7; 7') can fit to the fixed piece (1) starting from a rest position and moving towards a work position in which it is applied to the piece (1) by means of a flat support (5; 5') controlled by variable fluid pressure which extends at least along the part of the periphery of the piece that is to be equipped with the profiled bead.

12. The device as claimed in claim 11, **characterized in that** the forming face (7; 7') is a surface of a part of a flexible mold (6; 6') that can be applied without a seal to the piece (1) by means of the support (5; 5') in the work position.

13. The device as claimed in claim 12, **characterized in that** the flexible mold part (6; 6') constitutes a separate piece and is assembled fixedly or removably with the support (5; 5') or may be driven by the latter in the work position.

14. The device as claimed in claim 12, **characterized in that** the mold part is made of one piece with the support.

15. The device as claimed in any one of the preceding device claims, **characterized in that** the support (5, 5') has a cross section in the shape of a flexible hose with an interior space that can be subjected to a fluid pressure.

16. The device as claimed in any one of the preceding device claims, **characterized in that** the support is produced in the form of a membrane, which is a moving wall of a chamber that can be subjected to a fluid pressure.

17. The device as claimed in any one of the preceding device claims, **characterized in that** the support (5; 5') is supported by a support frame (3) which extends at least along the part of the periphery of the window pane (1) that is to be equipped with the profiled bead.

18. The device as claimed in claim 17, **characterized in that** the support frame (3) comprises rests for supporting the piece (1) to be equipped with the profiled bead.

19. The device as claimed in any one of the preceding device claims, **characterized in that** a mating mold (9) is provided to form a cavity (12) extending along the part of the periphery of the piece that is to be equipped with the profiled bead, and the interior contour (10) of which defines, as it meets the forming face, the cross-sectional profile of the profiled bead.

20. The device as claimed in any one of the preceding device claims, **characterized in that** the forming face (7) can be applied to one side of the piece (1) using the support, in a way such that it forms a continuation of the surface of the piece contiguous with this side, beyond the periphery thereof.

21. The device as claimed in any one of the preceding device claims, **characterized in that** a mold part (6') bearing the forming face (7') can be applied against a lateral face of a window pane (1) using the support, the mold part (6') being provided with a bearing face (7") tailored to the contour of this lateral face.
